# EUROPEAN PATENT APPLICATION

(11) **EP 1 002 692 A2**
(43) Date of publication of application: **24.05.2000**
(21) Application number: 99309246.9
(22) Date of filing: 19.11.1999
(51) Int. Cl.: B60N 2/46

(54) **Armrest mechanism**

(30) Priority: 21.11.1998 GB 9825503
(71) Applicant: Magna Seating Systems GMBH, 97816 Lohr Am Main (DE)
(72) Inventor: Smith, Aubrey, Autoseat Technologies Ltd, Towcester, Northants NN12 7HS (GB)
(74) Representative: Raynor, Simon Mark

(57) **Abstract**

An armrest mechanism, particularly for a vehicle seat, comprises storage apparatus, the storage apparatus being operative to stow an armrest (8) automatically upon folding of a back (4) of a seat in which the armrest is installed. In a disclosed embodiment, the storage apparatus includes a strap (12), which is drawn in a first direction as the back (4) is folded. Drawing the strap (12) in this manner causes the armrest (8) to fold. A resetting mechanism is provided that moves the strap (12) in a direction opposite to the first direction when the back (4) is folded to the open position.

## Description

The present invention relates to an armrest mechanism. In particular, but not exclusively, the invention relates to an armrest mechanism for the rear seat of a car.

The rear seats of cars are often provided with an armrest, which is mounted on a pivot pin in the seat back (or "squab") and may be stowed in a recess in the seat back. If the seat back can be folded forwards, for example to increase the luggage space, the armrest must generally be stowed away before the seat back is dumped forwards.

It is an aim of the present invention to provide an armrest mechanism that stows the armrest automatically as the seat back is dumped forwards.

From a first aspect, the invention provides an armrest mechanism characterised in that it stows the armrest automatically as the seat back is dumped forwards.

From another aspect, the invention provides an armrest mechanism for example for a vehicle seat characterised in that the armrest mechanism is operative to stow the armrest automatically upon folding of a back of a seat in which the armrest is mounted.

This avoids the need for a user to fold the armrest manually, and avoids the risk that accidental omission to do so might cause inconvenience to the user or damage to the armrest.

Preferably, the armrest can be moved manually between its lowered and its raised positions when the back is in a raised position. This avoids any inconvenience to the user when the functional aspects of the armrest mechanism are not actually needed.

In one family of embodiments, the armrest mechanism includes a strap which when pulled causes the armrest to be drawn towards the stowed position. In such embodiments, a drive mechanism may be provided to operatively interconnect the strap and the armrest. The drive mechanism is typically operative to convert linear movement of the strap to rotary movement of an armature component of the armrest.

In embodiments according to the last-preceding paragraph, the strap may carry a first set of gear teeth in engagement with a first gear of the drive mechanism. The armrest mechanism may include a spindle, the first gear and the armature component being rotationally fixed with respect to the spindle.

In an armrest mechanism according to either of the last two preceding paragraphs the strap may be connected to the back, and may be configured such that the strap is pulled in a first direction by the back to draw the armrest to its stowed position. Such an armrest mechanism may further comprise a resetting mechanism operative to maintain tension in the strap and to pull it in a direction opposite to the first direction when the back is moved from its stowed position towards its raised position. In such embodiments, the resetting mechanism may include a second gear engaged with a second set of gear teeth on the strap. For example, a torsion spring may be provided operative to drive the second gear, the torsion spring typically being placed under tension by the action of moving the back to the stowed position.

From another aspect the invention provides a seat having a back and an armrest, the back being foldable from an operative position for use by an occupant of the seat to a folded position characterised in that the armrest is carried on a mechanism according to any preceding claim whereby it is moved to a stowed position automatically upon folding of the back.

Such a seat may be a seat for a motor land vehicle.

An embodiment of the invention will now be described, by way of example, with reference to the accompanying drawings, in which:
Fig. 1 is a perspective view showing the major components of the armrest mechanism with the seat back in an upright position;
Fig. 2 is a perspective view showing the major components of the armrest mechanism with the seat back halfway to a stowed position;
Fig. 3 is a perspective view showing the major components of the armrest mechanism with the seat back in a fully stowed position, and
Fig. 4 is a side view of a seat, showing the seat back in an upright position, halfway to a stowed position and in a fully stowed position.

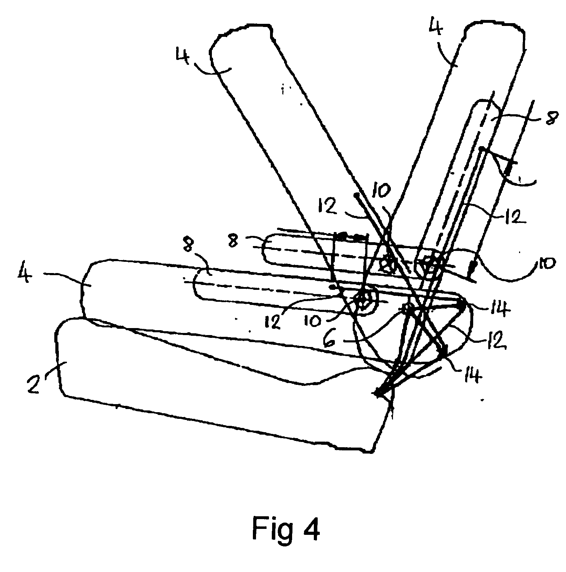

Turning first to Fig. 4, the car seat includes a base cushion 2 and a seat back (or "squab") 4, which is shown in an upright position (at A), half-way to a stowed position (at B) and in a fully stowed position (at C). The back 4 is mounted for pivoting movement relative to the base cushion 2 about a pivot pin 6.

An armrest 8 is attached to the seat back 4 for pivoting movement about a spindle 10. When the seat back 4 is in an upright position, the armrest may be lowered to a substantially horizontal position for use or it may be stowed in a recess (not shown) in the seat back 4.

A flexible strap 12 is attached at its lower end to the rear part of the base cushion 2 and extends upwards around a guide pin 14 through the rear portion of the seat back 4. As the seat back 4 pivots forwards, the strap 12 is pulled downwards relative to the seat back, owing to the fact that it is deflected around the guide pin 14 as shown in the drawing.

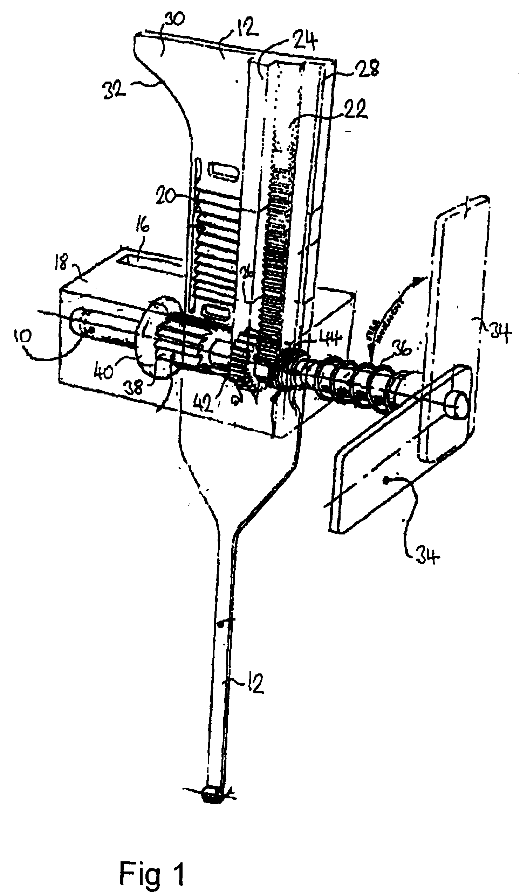

Fig. 1 shows the armrest mechanism in more detail, in the configuration that it adopts when the back 4 is in the upright position. The mechanism further includes a gearbox 16. The strap 12 extends upwards through a slot 16 in the rear of the gearbox 18 and has on its front surface a first set of gear teeth 20, a second set of gear teeth 22, a vertical rib 24 that engages a correspondingly shaped cut-out 26 forming part of the gearbox slot 16, and a side flange 28. An upper side part 30 of the strap 12 flares outwards, the side edge of that part forming a cam face 32. The spindle 10 extends substantially horizontally through the gearbox 18 and is mounted for both rotational and axial movement relative to the gearbox.

A first end of the spindle 10 is connected to an armrest armature 34 for rotation therewith, such that the spindle 10 rotates as the armrest 8 is pivoted with respect to the back 4. A helical compression spring 36 is located around the first end of the spindle in compression between the armrest armature 34 and a corresponding end face of the gearbox 18.

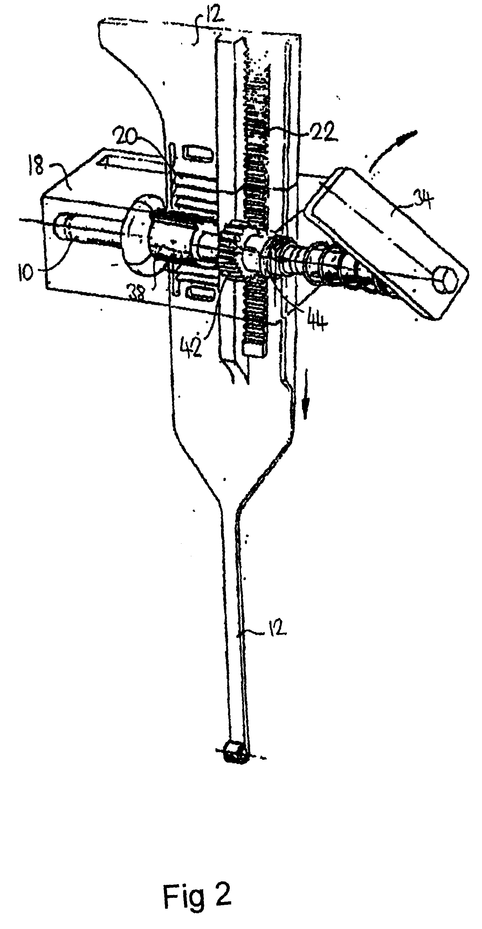

A first gear 38 is mounted on the spindle 10 for rotation therewith. The first gear 38 has teeth around only part of its circumference so that the gear engages the first set of teeth 20 on the strap 12 only if the armrest is in a lowered or partially lowered position. The first set of teeth 20 is provided only on the upper part of the strap 12 so that the gear engages the first set of teeth only after the strap has been pulled partially downwards by the action of stowing the seat back (to the position shown in Fig. 2). When the seat back is in a fully raised position, the first gear 38 does not engage the first set of teeth 20, thus allowing the armrest 8 to be raised and lowered as desired.

The teeth on the first gear 38 and in the first set of teeth 20 are shaped as ratchet teeth to engage positively only when the strap 12 moves downwards relative to the first gear 38. When the strap 12 moves upwards relative to the first gear 38, the teeth slip over one another without engaging positively.

Adjacent the first gear 38 there is a disc-shaped cam follower 40, which engages the cam face 32 formed by the edge of the strap 12.

A second gear 42 is mounted on the spindle 10 for free rotation relative thereto. The second gear 42 engages the second set of teeth 22 formed on the strap 12. A torsion spring 44 is mounted on the spindle adjacent the second gear 42. One end of the torsion spring engages the second gear 42 and the other end engages the free edge of the flange 28 formed on the side of the strap. The torsion spring 44 is always in tension and acts on the second gear 42 to urge the strap upwards relative to the seat back.

When the seat back 4 is in an upright position as shown in Fig. 1, the first gear 38 does not engage the first set of teeth 20 on the strap 12. The spindle 10 is thus able to rotate freely, allowing the armrest 8 mounted on the armrest armature 34 to be raised and lowered as required.

As the seat back is pushed forwards (as shown in Fig. 2), the strap 12 is pulled downwards and the first gear 38 engages the first set of teeth 20, so causing the spindle to rotate. This lifts the armrest 8 into a stowed position. At the same time, downwards movement of the strap 12 causes the second gear 42 to rotate, thereby winding up the torsion spring 44.

If the armrest is already raised, the first gear 38 will not engage the first set of teeth 20 and no further rotation of the spindle will result.

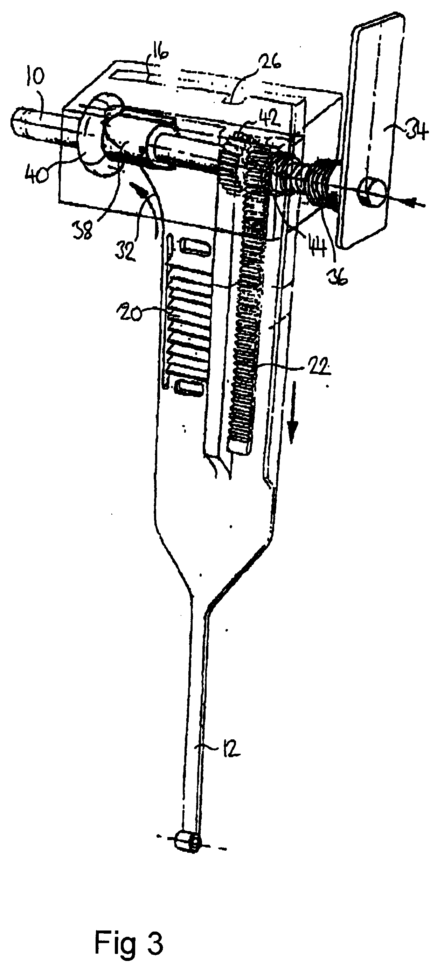

Fig. 3 shows the situation with the seat back 4 in a fully stowed position. The spindle 10 has rotated fully thereby stowing the armrest 4. Downwards movement of the strap 12 has resulted in the cam face 32 engaging the cam follower 40, which has drawn the spindle inwards, compressing the compression spring 36 between the side of the gearbox 18 and the armrest armature 34. This disengages the first gear 38 from the first set of teeth 20. The torsion spring 44 has been fully wound owing to rotation of the second gear 42.

When the seat back 4 is returned to the upright position, the second gear 42 drives the strap 12 upwards under the influence of the torsion spring 44. The compression spring 36 drives the spindle 10 back to its original position and the first gear 38 engages the first set of teeth 20. Owing to the one-way action of the ratchet teeth, the armrest 8 is not lowered automatically but may be lowered manually.

## Claims

1. An armrest mechanism for a vehicle seat characterised in that the armrest is operative to stow an armrest (8) automatically upon folding of a back (4) of a seat in which the armrest is installed.

2. An armrest mechanism according to claim 1 in which the armrest (8) can be moved manually between its lowered and its raised positions when the back (4) is in a raised position.

3. An armrest mechanism according to claim 1 or claim 2 in which the armrest mechanism includes a strap (12) which when pulled causes the armrest (8) to be drawn towards the stowed position.

4. An armrest mechanism according to claim 3 in which a drive mechanism (18) operatively interconnects the strap (12) and the armrest (8).

5. An armrest mechanism according to claim 4 in which the drive mechanism is operative to convert linear movement of the strap (12) to rotary movement of an armature component (34) of the armrest (8).

6. An armrest mechanism according to claim 5 in which the strap (12) carries a first set of gear teeth (20) in engagement with a first gear (38) of the drive mechanism.

7. An armrest mechanism according to claim 6 including a spindle (10), the first gear (38) and the armature component (34) being rotationally fixed with respect to the spindle (10).

8. An armrest mechanism according to any one of claims 3 to 7 in which the strap (12) is connected to the back (4) and is configured such that the strap (12) is pulled in a first direction by the back (4) to draw the armrest (8) to its stowed position.

9. An armrest mechanism according to claim 8 further comprising a resetting mechanism operative to maintain tension in the strap (12) and to pull it in a direction opposite to the first direction when the back (4) is moved from its stowed position towards its raised position.

10. An armrest according to claim 9 in which the resetting mechanism includes a second gear (42) engaged with a second set of gear teeth (22) on the strap (12).

11. An armrest according to claim 10 further comprising a torsion spring (44) operative to drive the second gear (42).

12. An armrest according to claim 11 in which the torsion spring is placed under tension by the action of moving the back (4) to the stowed position.

13. A seat having a back (4) and an armrest (8), the back being foldable from an operative position for use by an occupant of the seat to a folded position characterised in that the armrest (8) is carried on a mechanism according to any preceding claim whereby it is moved to a stowed position automatically upon folding of the back (4).

14. A seat according to claim 13 being a seat for a motor land vehicle.
